# EUROPEAN PATENT APPLICATION

(11) **EP 4 790 289 A1**
(43) Date of publication of application: **12.08.2026**
(21) Application number: 26156037.9
(22) Date of filing: 03.02.2026
(51) Int. Cl.: F16K 31/524, F16K 31/53, F16K 31/04, F16K 31/05, F24F 13/14, H02K 7/116

(54) **ONE HAND OPERATED MANUAL OVERRIDE MECHANISM FOR ACTUATOR**

(30) Priority: 07.02.2025 US 202519048761
(71) Applicant: Schneider Electric Buildings Americas, Inc., Carrollton, TX 75006 (US)
(72) Inventor: MARTINEAU, Matthew, Carrollton, 75006 (US); DU, John, Carrollton, 75006 (US)
(74) Representative: Openshaw & Co.

(57) **Abstract**

A manual override mechanism (200) for an actuator (100) allows an operator to put the actuator in manual operation mode using a single motion performed with one hand. Once in manual operation mode, the actuator (100) automatically remains so until the operator performs the motion again in reverse. This obviates the need for the operator to hold down an override button or otherwise manually maintain the actuator (100) in manual operation mode. The manual override mechanism may include a flip lever (110) and the single motion is a flipping motion. The motion of flipping the flip lever (110) rotates a cam (326) on the flip lever (110) that moves a follower of the manual override mechanism in a preset direction. The movement of the follower disengages a drive gear (210) in the actuator from an output gear (208) in the actuator (100), thereby putting the actuator (100) in manual operation mode.

## Description

### TECHNICAL FIELD

The present disclosure relates to valve and damper actuators and particularly to systems and methods for providing an actuator having a manual override mechanism that can be operated using a single motion performed with one hand.

### BACKGROUND

Automated actuators are used to control valves and dampers in many types of industrial and consumer applications where the use of manual actuators is not feasible. However, a problem can arise if the actuator loses power due to an electrical power outage, loss of compressed air, or a hydraulic system malfunction, and the like, and is unable to perform its intended function. For this reason, many automated valve and damper actuators come equipped with a manual operation mode that allows an operator to manually operate the valve or damper in an emergency, thereby ensuring that critical processes can continue or be shut down safely. The manual operation mode also allows the operator to manually adjust the valve or damper from time to time as needed for maintenance purposes, or during installation, commissioning or calibration of the valve or damper.

In existing automated valve and damper actuators, manual operation requires the operator to manipulate a manual override mechanism that puts the actuator in manual operation mode. However, the manual override mechanism in most automated actuators can be cumbersome and difficult for operators to operate. For example, some manual override mechanisms require the operator to depress and continuously hold a manual override button to put the actuator in manual operation mode. This leaves the operator with only one hand free to manually operate the valve or perform other tasks in manual operation mode, which can be physically challenging. Accordingly, while a number of advances have been made in the field of actuators, it will be appreciated that improvements are continually needed.

### SUMMARY

Embodiments of the present disclosure relate to systems and methods of providing a manual override mechanism for valve and damper actuators. The manual override mechanism allows an operator to quickly and easily put an actuator in manual operation mode using a single motion that can be performed with one hand. Once in manual operation mode, the actuator automatically remains so until the single motion is performed again in reverse. This obviates the need for the operator to hold down an override button or otherwise manually maintain the actuator in manual operation mode. As a result, the operator can use both hands for performing other tasks, such as manually operating the valve or damper. In some embodiments, the disclosed manual override mechanism includes a flip lever or similar flip type handle, and the single motion is a flipping motion or similar motion on the flip lever. In these embodiments, the motion of flipping the flip lever rotates a cam on the lever that moves a follower of the manual override mechanism in a preset direction. The movement of the follower disengages a drive gear in the actuator from an output gear in the actuator, thereby putting the actuator in manual operation mode. The actuator thereafter stays in manual operation mode until the flip lever or similar flip type handle is flipped back to its original position.

In general, in one aspect, embodiments of the present disclosure relate to a manual override mechanism for an actuator. The manual override mechanism comprises, among other things, an override handle configured to be rotated between a closed position and an opened position via a flip motion, and a cam follower positioned adjacent the override handle and configured to be moved between a disengaged position and an engaged position. The manual override mechanism further comprises a cam formed on a portion of the override handle, the cam configured to cause the cam follower to move from the disengaged position to the engaged position when the override handle is rotated from the closed position to the opened position. Movement of the cam follower from the disengaged position to the engaged position puts the actuator in manual operation mode.

In general, in another aspect, embodiments of the present disclosure relate to a method of providing a manual override mechanism for an actuator. The method comprises, among other things, providing an override handle configured to be rotated between a closed position and an opened position via a flip motion, and positioning a cam follower adjacent the override handle, the cam follower configured to be moved between a disengaged position and an engaged position. The method further comprises forming a cam on a portion of the override handle, the cam configured to cause the cam follower to move from the disengaged position to the engaged position when the override handle is rotated from the closed position to the opened position. Movement of the cam follower from the disengaged position to the engaged position puts the actuator in manual operation mode.

In general, in yet another aspect, embodiments of the present disclosure relate to an actuator. The actuator comprises, among other things, at least one housing enclosing a plurality of gears therein and a control board configured to control operation of the plurality of gears, and a manual override mechanism mounted in the at least one housing, the manual override mechanism including an override handle configured to be rotated between a closed position and an opened position. Rotating the override handle from the closed position to the opened position causes the manual override mechanism to put the actuator in manual operation mode, and rotating the override handle from the opened position to the closed position causes the manual override mechanism to put the actuator to automatic operation mode.

In accordance with any one or more of the foregoing embodiments, the override handle is configured to block the cam follower from moving back to the disengaged position while the override handle remains in the opened position.

In accordance with any one or more of the foregoing embodiments, the cam follower includes a cam extender configured to receive a push motion from the cam when the override handle is rotated from the closed position to the opened position.

In accordance with any one or more of the foregoing embodiments, the cam extender has a cam tab disposed thereon, the cam tab configured to receive thereon the push motion from the cam.

In accordance with any one or more of the foregoing embodiments, the cam follower includes a gear slider configured to cause a gear of the actuator to become disengaged when the override handle is rotated from the closed position to the opened position.

In accordance with any one or more of the foregoing embodiments, the gear slider includes a gear catcher attached thereto, the gear catcher configured to catch the gear therein when the override handle is rotated from the closed position to the opened position.

In accordance with any one or more of the foregoing embodiments, a biasing member is positioned adjacent the cam follower, the biasing member configured to urge the cam follower toward the override handle when the override handle is rotated from the closed position to the opened position.

### BRIEF DESCRIPTION OF THE DRAWINGS

FIGS. 1A-1B are perspective views of an actuator having an exemplary manual override mechanism therein according to embodiments of the present disclosure;
FIGS. 2A-2B are cutaway views of the actuator having the exemplary manual override mechanism therein according to embodiments of the present disclosure;
FIG. 3 is an exploded view showing several components of the exemplary manual override mechanism according to embodiments of the present disclosure;
FIG. 4 is a perspective view of the components of the exemplary manual override mechanism in an assembled form according to embodiments of the present disclosure; and
FIG. 5 is a flowchart for an exemplary method that may be used with the manual override mechanism according to embodiments of the present disclosure.

### DETAILED DESCRIPTION

This description and the accompanying drawings illustrate exemplary embodiments of the present disclosure and should not be taken as limiting, with the claims defining the scope of the present disclosure, including equivalents. Various mechanical, compositional, structural, electrical, and operational changes may be made without departing from the scope of this description and the claims, including equivalents. In some instances, well-known structures and techniques have not been shown or described in detail so as not to obscure the disclosure. Further, elements and their associated aspects that are described in detail with reference to one embodiment may, whenever practical, be included in other embodiments in which they are not specifically shown or described. For example, if an element is described in detail with reference to one embodiment and is not described with reference to a second embodiment, the element may nevertheless be claimed as included in the second embodiment.

As alluded to above, embodiments of the present disclosure relate to systems and methods of providing a manual override mechanism for an actuator of the type commonly used to actuate valves and dampers, such as ball valves and rotary dampers, and other controlled devices. The manual override mechanism allows an operator to quickly and easily put the actuator in manual operation mode using a single motion that can be performed with one hand. The actuator automatically remains in manual operation mode until the operator performs the single motion again in reverse. This frees up both of the operator's hands for performing other tasks, such as manually adjusting the valve or damper.

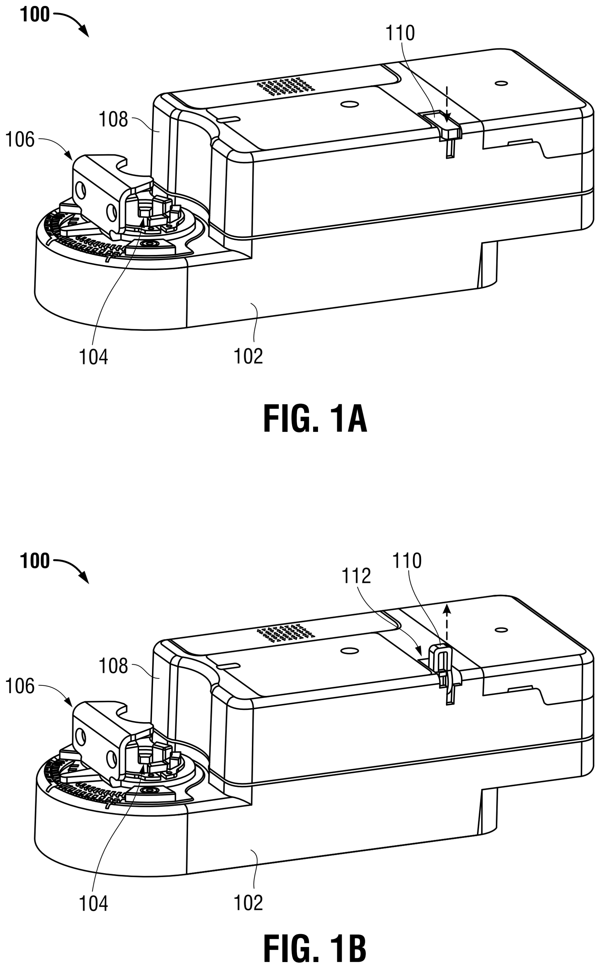

Referring now to FIG. 1A, an exemplary actuator 100 is shown having a manual override mechanism according to embodiments of the present disclosure. The actuator 100 depicted here resembles a typical rotary damper actuator insofar as there is a generally rectangular first or lower housing 102 encasing an actuator motor therein (not visible here), and a generally circular output shaft 104 provided near the top of the lower housing 102 for direct coupling to a damper input shaft (not shown). A clamping assembly 106 is mounted to the housing 102 over the output shaft 104 for securely clamping the actuator 100 around the damper input shaft. A generally rectangular second or upper housing 108 is attached to the lower housing 102 for enclosing various control electronics therein for the actuator 100. In some embodiments, the lower housing 102 and the upper housing 108 may be provided as a single housing that provides the same function as the lower and upper housings 102, 108.

In accordance with embodiments of the present disclosure, a manual override mechanism is provided for the actuator 100 that can be operated using a single motion performed with one hand. The exemplary manual override mechanism includes a manual override handle or lever that resembles a generally rectangular flip lever 110 or similar flip type handle that an operator can flip to engage the manual override mechanism. The flip lever 110 is rotatably mounted on the upper housing 108, for example, on a face thereof, such as the face opposite the lower housing 102 (i.e., front face), preferably adjacent an edge of the front face. Such a flip lever 110 can be toggled or flipped between two operational positions, a first operational position as depicted in FIG. 1A, and a second operational position as depicted in FIG. 1B. The first position is a closed position where the lever 110 lies flat, generally even or flush with the front face of the upper housing 108. When the flip lever 110 is in this position, the manual override mechanism is in a disengaged state, and the actuator 100 operates in automatic operation mode.

FIG. 1B shows the flip lever 110 in the second or opened position where the lever 110 stands upright, generally perpendicular relative to the front face of the upper housing 108. When the flip lever 110 is in this position, the manual override mechanism is in an override state, and the actuator 100 operates in manual operation mode. An operator can toggle the flip lever 110 into this position by using a finger or thumb of one hand to push the lever 110 up (i.e., an up-flip motion), as indicated by the dashed up arrow. The operator can likewise toggle the flip lever 110 into the closed position by using a finger or thumb of one hand to pull the lever 110 down (i.e., a down-flip motion), as indicated by the dashed down arrow. A generally rectangular recessed opening 112 is formed or otherwise provided in the front face of the upper housing 108 in which the flip lever 110 may be seated.

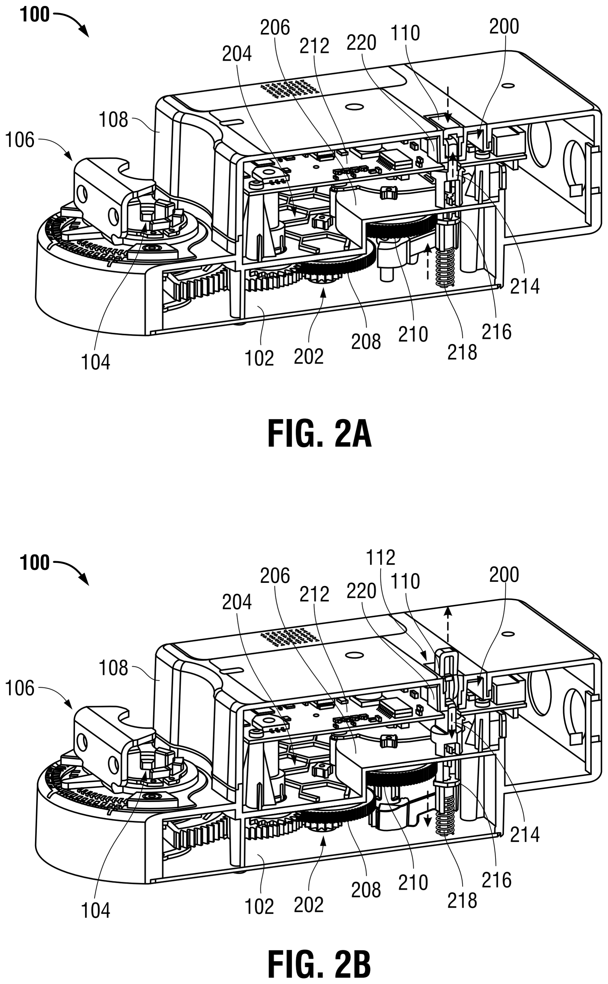

FIG. 2A provides a view of the actuator 100 with a portion of the lower housing 102 and the upper housing 108 removed to show the manual override mechanism in more detail, generally indicated at 200. As can be seen, the actuator 100 includes a lower chamber 202 and an upper chamber 204 separated by a partition 206. The lower chamber 202 contains various mechanical components of the actuator 100, including an output gear 208 and a drive gear 210, among other things. The upper chamber 204 similarly contains various control components of the actuator 100, including a control board 212 on which a microcontroller and other control circuitry reside. Meanwhile, the manual override mechanism 200 is mounted generally perpendicularly to the actuator 100, extending from the upper chamber 204 into the lower chamber 202 by virtue of corresponding passages formed or otherwise provided in the control board 212 and the partition 206, respectively.

In the embodiment shown, the manual override mechanism 200 is composed of several generally elongate components positioned adjacent one another, including a cam extender 214 and a gear slider 216, as well as a spring 218 or similar biasing member and the flip lever 110 discussed earlier. In some embodiments, the manual override mechanism 200 also includes a gasket 220 configured to be fitted adjacent and underneath the recessed opening 112 to provide a seal against fluids or other unwanted materials from entering the actuator 100 through the recessed opening 112. When the flip lever 110 is in the closed position, as depicted here, the cam extender 214 and the gear slider 216 are in a disengaged position and there is no load on the spring 218. In this position, the manual override mechanism 200 is in the disengaged state and the actuator 100 operates in automatic operation mode.

FIG. 2B depicts the manual override mechanism 200 in the override state, with the flip lever 110 having been toggled or flipped into an opened position via an up-flip motion by an operator. Upon receiving such a motion, the flip lever 110 is configured to push the cam extender 214 in a preset direction within the actuator 100, which is directly away from the lever 110 in this example, until the lever 110 stands upright. The pushing of the cam extender 214, in turn, moves the gear slider 216 along the same direction, as indicated by the dashed down arrows, thereby causing the spring 218 to become loaded. At this point, the cam extender 214 and the gear slider 216 are in an engaged or override position, and the spring 218 is loaded. The movement of the gear slider 216 also causes the output gear 208 to become disengaged from the drive gear 210, thereby putting the actuator 100 in manual operation mode.

Once upright, the flip lever 110 is configured to be locked or otherwise stay in the upright position, which blocks the cam extender 214 and the gear slider 216 from returning to the disengaged position within the actuator 100. Consequently, the actuator 100 remains in manual operation mode until the flip lever 110 is flipped back to the closed position, via a down-flip motion from the operator. Upon being flipped back to the closed position, the flip lever 110 unblocks the cam extender 214 and the gear slider 216, allowing them to return to the disengaged position within the actuator 100 via the now-loaded spring 218. The return of the gear slider 216 to the disengaged position also causes the output gear 208 to become re-engaged to the drive gear 210, which puts the actuator 100 back in automatic operation mode.

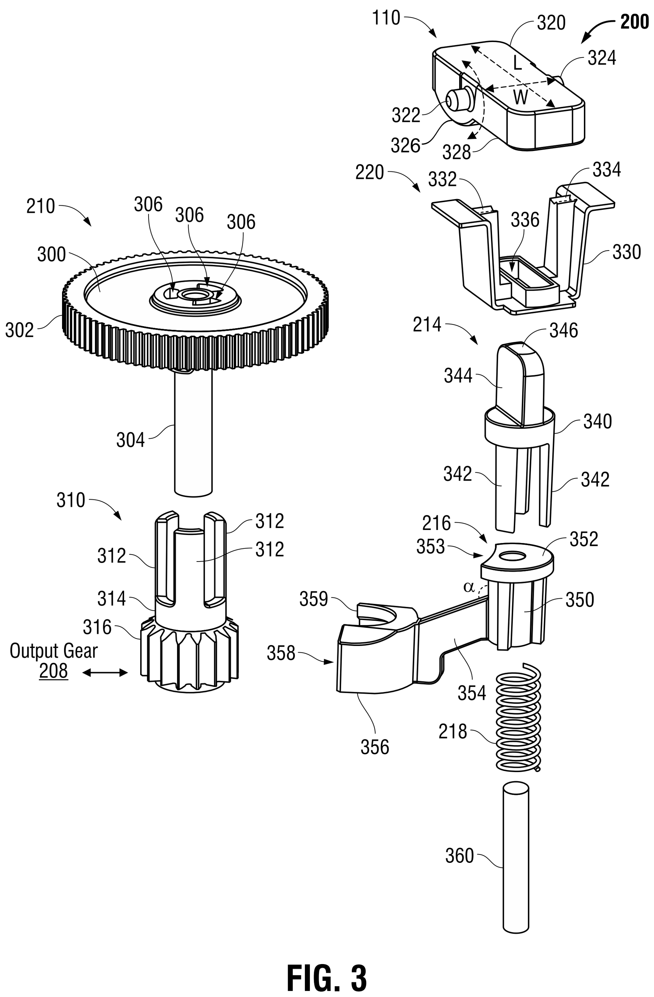

FIG. 3 shows an exploded view of the manual override mechanism 200 and associated components. As can be seen, the drive gear 210 in the example has a circular body 300 with gear teeth 302 provided thereon and supported by an axially extending support shaft 304 attached to the gear body 300. Two or more evenly spaced slots 306 are formed on an interior of the gear body 300 at a predefined radial distance from a central axis thereof. The two or more slots 306 are configured to allow the drive gear 210 to be engaged to a pinion gear 310 via two or more tongs 312 that correspond to the two or more slots 306. The two or more tongs 312 of the pinion gear 310 extend from a tubular body 314, each tong 312 configured to be received within a slot 306 of the drive gear 210 to engage the drive gear 210. The pinion body 314 of the pinion gear 310 is provided with gear teeth 316 that are configured to engage corresponding gear teeth of the output gear 208 (see FIGS. 2A-2B) when the actuator 100 is in automatic operation mode. When the gear teeth 316 are thus engaged, rotation of the pinion gear 310 by operation of the drive gear 210 also rotates the output gear 208. Moving the pinion gear 310 axially away from the drive gear 210 disengages the pinion gear 310 from the drive gear 210, which also disengages the output gear 208 from the drive gear 210, thereby putting the actuator in manual operation mode.

The flip lever 110 has a generally elongate lever body 320 with a generally planar top surface and front end, a generally planar back end that is identical, or nearly so, to the front end, and two generally planar side surfaces. Laterally extending pins 322, 324 protrude from the side surfaces, one on each side of the lever body 320 directly opposite one another. The pins 322, 324 are configured to allow the lever body 320 to rotate about a lateral axis defined by the pins 322, 324 when the flip lever 110 is mounted in the actuator 100, as indicated by the dashed double-headed curved arrow. Those skilled in the art will appreciate that the laterally extending pins 322, 324 may also be a single pin instead that extends widthwise through the lever body 320 in some embodiments.

In some embodiments, a hump or similarly rounded protrusion may be provided on a bottom surface of the lever body 320 that functions as a cam 326. The cam 326 may be symmetrical in a longitudinal and/or lateral direction in some embodiments, and may extend across the width "W" of the lever body 320 in some embodiments, but only partly along the length "L" of the body 320, starting from the back end of the body 320. When the flip lever 110 is rotated about the pins 322, 324, the cam 326 is configured to swing along with the rotation. This swing translates the cam 326 from a horizontal orientation to a vertical orientation when the flip lever 110 rotates from a closed position to an opened position. The translation of the cam 326 imparts a push motion to the cam extender 214, which moves the gear slider 216 in the same direction, as discussed above.

Thereafter, the flip lever 110 is configured to be locked or otherwise stay in the opened position by virtue of the spring 218 urging the gear slider 216 and the cam extender 214 against the planar back end of the lever body 320, keeping the lever 110 in the opened position (see FIG. 2B) until an operator flips the lever 110 back to the closed position. Flipping the flip lever 110 back to the closed position returns the cam 326 to its initial position, which allows the cam extender 214 as well as the gear slider 216 to be returned to their disengaged position (see FIG. 2A) by operation of the spring 218.

The gasket 220, as discussed above, is configured to be fitted adjacent and underneath the recessed opening 112 in the upper housing 108 to provide a seal against fluids or other unwanted materials from entering the actuator 100 through the recessed opening 112. To this end, the gasket 220 may have any shape and include any structures known to those skilled in the art that can conform to and otherwise complement the recessed opening 112 to provide a seal. In the present example, the gasket 220 has a generally U-shaped gasket body 330 with supporting pin grooves 332, 334 provided on the body 330 that correspond to the locations and shape of the pins 322, 324 of the flip lever 110. The supporting pin grooves 332, 334 are configured to receive the pins 322, 324 thereon and provide structural support therefor. In such embodiments, corresponding grooves or similar structures (not shown) are provided on the upper housing 108 that are complementary to and form a hinge or joint with the pin grooves 332, 334 when the gasket 220 is fitted underneath the recessed opening 112. This arrangement allows the flip lever 110 to be rotated between the closed and opened positions via the pins 322, 324 while remaining secured to the upper housing 108. A generally rectangular opening 336 is provided in the gasket 220, as shown, for receiving the cam extender 214 therethrough when the override mechanism 200 is assembled.

The cam extender 214 is a generally elongate component that is configured to receive the push motion imparted by the cam 326 and transfer that motion directly to another component, which is the gear slider 216 in this example. As such, the cam extender 214 may have any shape and include any structures known to those skilled in the art that can transfer in-line the push motion imparted by the cam 326. In the embodiment shown, the cam extender 214 has a generally circular base 340 with two or more legs 342 extending substantially perpendicularly from a bottom surface of the base 340 and spaced apart around a circumference of the base 340. A generally rectangular cam tab 344 extends substantially perpendicularly from a top surface of the base 340 and is configured to protrude through the rectangular opening 336 in the gasket 220 when the override mechanism 200 is assembled. When thus assembled, a top surface 346 of the cam tab 344 abuts, or nearly so, a non-cam portion 328 of the bottom surface of the lever body 320 while the lever 110 is in the closed position. When the flip lever 110 is flipped to the opened position, the top surface 346 of the cam tab 344 is configured to contact and receive the push motion imparted by the cam 326.

The gear slider 216, as discussed above, is configured to cause the output gear 208 to become disengaged from the drive gear 210 upon receiving the push motion imparted by the cam 326 via the cam extender 214. Accordingly, the gear slider 216 may have any shape and include any structures known to those skilled in the art that can receive the push motion imparted by the cam 326 via the cam extender 214, and thereafter move the pinion gear 310 axially away from the drive gear 210 to disengage it from the drive gear 210, and thereby disengage the drive gear 210 from the output gear 208. In the present example, the gear slider 216 has a generally cylindrical body 350 with a generally planar top surface 352 configured to receive the push motion imparted by the cam 326 via the two or more legs 342 of the cam extender 214. If needed, a portion of the top surface 352 may be removed in order to provide space for the drive gear 210 within the actuator 100, as indicated at 353. Meanwhile, the bottom of the gear slider body 350 is configured to contact and cause loading of the spring 218 when the gear slider 216 is moved by the push motion imparted by the cam 326.

In some embodiments, a gear slider arm 354 extends radially from the gear slider body 350, either perpendicularly to a central axis thereof or at a different predefined angle α (e.g., about 120 degrees), as depicted here. A semicircular gear catcher 356 is attached to a terminal end of the gear slider arm 354 and configured to fit over the gear teeth 316 of the pinion gear 310 when the manual override mechanism 200 is assembled. To this end, the gear catcher 356 defines a semicircular hollow 358 having a radius that is just sufficient to allow the gear catcher 356 to receive the gear teeth 316 of the pinion gear 310 therein, and a throat 359 having another radius that is just sufficient to allow the gear catcher 356 to receive the pinion body 314 therein. Such a gear catcher 356 is configured to be slid over the gear teeth 316 of the pinion gear 310 and move it axially away from the drive gear 210 when the gear slider 216 receives the push motion imparted by the cam 326 via the cam extender 214. A post 360 is provided in some embodiments on which the gear slider body 350 may be mounted to guide the movement of the gear slider 216.

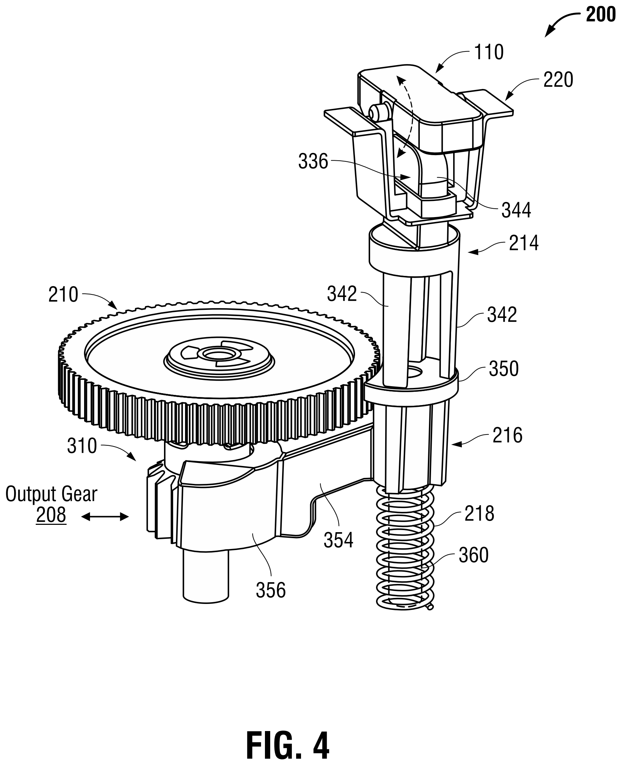

FIG. 4 shows the manual override mechanism 200 of FIG. 3 in an assembled form and the pinion gear 310 being engaged to the drive gear 210. When the manual override mechanism 200 is thus assembled, the flip lever 110 is rotatably supported by the gasket 220, with the cam tab 344 of the cam extender 214 protruding through the rectangular opening 336 of the gasket 220 to abut, or nearly so, the non-cam portion 328 of the bottom surface of the flip lever 110. The two or more legs 342 of the cam extender 214 are in mechanical contact with the gear slider body 350 of the gear slider 216, and the gear catcher 356 attached to the terminal end of the gear slider arm 354 hovers directly over the pinion gear 310, meaning the flip lever 110 is currently in the closed position. Flipping the flip lever 110 to the opened position imparts a push motion to the cam extender 214 that is transferred to the gear slider 216, which causes the gear catcher 356 to move the pinion gear 310 axially away from the drive gear 210, thereby disengaging the pinion gear 310, and thus the output gear 208, from the drive gear 210. The flip lever 110 remains in the opened position until an operator flips it back to the closed position, at which time the cam extender 214 and the gear slider 216 are returned to their earlier positions by operation of the spring 218.

In the above embodiments, the cam extender 214 and the gear slider 216 together constitute a cam follower that operates in conjunction with the cam 326. Those skilled in the art will appreciate that such a cam follower may also be implemented as a single, unitary component that performs the same functions as the cam extender 214 and the gear slider 216 within the scope of the disclosed embodiments. Further, although the above examples contemplate the spring 218 or similar biasing member being unbiased when the cam extender 214 and the gear slider 216 are in their disengaged positions, those skilled in the art will appreciate that the spring 218 may be preconfigured with a small amount of loading to maintain the gear slider 216 in mechanical contact with the cam extender 214 even while in their disengaged positions.

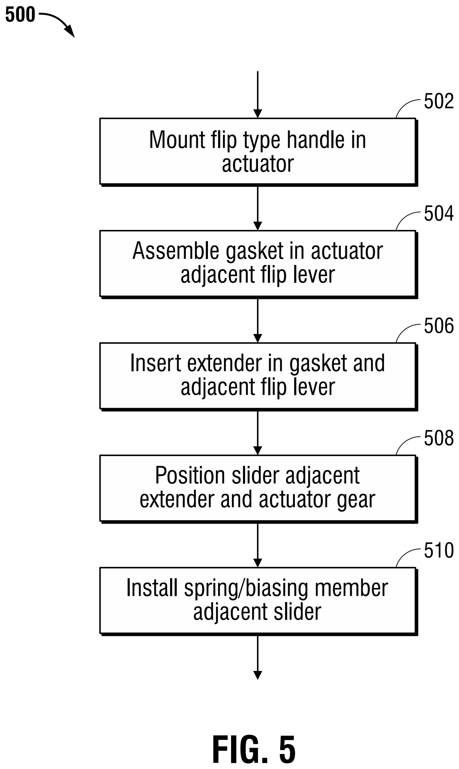

Referring now to FIG. 5, a flowchart 500 is shown representing a method that may be used with embodiments of a manual override mechanism for an actuator similar to the override mechanism 200 disclosed herein. The method generally begins at block 502, where a flip type handle is rotatably mounted in the actuator, for example, in a second or upper housing of the actuator. The flip type handle may be similar to the flip lever 110 herein in some embodiments, including that the handle is configured to impart a push motion when rotated from a closed position to an opened position. At block 504, a gasket may be assembled into the actuator adjacent the flip type handle to provide a seal around the handle. The gasket may be similar to the gasket 220 herein in some embodiments, including that the gasket is configured to provide rotational support for the handle. At block 506, an extender is inserted into an opening in the gasket so as to be positioned adjacent the flip type handle. The extender may be similar to the cam extender 214 herein in some embodiments, including that the extender is configured to receive the push motion imparted by the flip type handle. At block 508, a slider is positioned adjacent the extender and a gear of the actuator. The slider may be similar to the gear slider 216 herein in some embodiments, including that a gear catcher is attached thereto and configured to disengage a pinion gear of the actuator when the flip type handle is rotated from the closed position to the opened position. At block 510, a spring or other biasing member is installed in the actuator adjacent the slider. The spring or biasing member is configured to urge the slider, and thus the extender, toward the flip type handle when the handle is rotated from the closed position to the opened position.

Thus far, a number of features and advantages of embodiments of the present disclosure have been shown and described. Other possible features and advantages associated with the disclosed embodiments will be appreciated by one of ordinary skill in the art. It will be appreciated that the development of an actual commercial application incorporating aspects of the disclosed embodiments will require many implementation-specific decisions to achieve a commercial embodiment. Such implementation specific decisions may include, and likely are not limited to, compliance with system related, business related, government related and other constraints, which may vary by specific implementation, location and from time to time. While a developer's efforts might be considered complex and time consuming, such efforts would nevertheless be a routine undertaking for those of skill in this art having the benefit of this disclosure.

It should also be understood that the embodiments disclosed and taught herein are susceptible to numerous and various modifications and alternative forms. Thus, the use of a singular term, such as, but not limited to, "a" and the like, is not intended as limiting of the number of items. Similarly, any relational terms, such as, but not limited to, "top," "bottom," "left," "right," "upper," "lower," "down," "up," "side," and the like, used in the written description are for clarity in specific reference to the drawings and are not intended to limit the scope of the invention.

The flowchart and block diagrams in the Figures illustrate the architecture, functionality and/or operation of possible implementations of various embodiments of the present disclosure. In this regard, each block in the flowchart or block diagrams may represent a module, segment or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While particular embodiments and applications of the present disclosure have been illustrated and described, it is to be understood that embodiments of the disclosure not limited to the precise construction and compositions disclosed herein and that various modifications, changes, and variations can be apparent from the foregoing descriptions without departing from the scope of the disclosure as defined in the appended claims.

Further aspects of the invention are provided by the subject matter of the following clauses:
Clause 1. A manual override mechanism for an actuator, the manual override mechanism comprising: an override handle configured to be rotated between a closed position and an opened position via a flip motion; a cam follower positioned adjacent the override handle and configured to be moved between a disengaged position and an engaged position; and a cam formed on a portion of the override handle, the cam configured to cause the cam follower to move from the disengaged position to the engaged position when the override handle is rotated from the closed position to the opened position; wherein movement of the cam follower from the disengaged position to the engaged position puts the actuator in manual operation mode.
Clause 2. The manual override mechanism of Clause 1, wherein the override handle is configured to block the cam follower from moving back to the disengaged position while the override handle remains in the opened position.
Clause 3. The manual override mechanism of Clause 1 or Clause 2, wherein the cam follower includes a cam extender configured to receive a push motion from the cam when the override handle is rotated from the closed position to the opened position.
Clause 4. The manual override mechanism of Clause 3, wherein the cam extender has a cam tab disposed thereon, the cam tab configured to receive thereon the push motion from the cam.
Clause 5. The manual override mechanism of any of Clauses 1 to 4, wherein the cam follower includes a gear slider configured to cause a gear of the actuator to become disengaged when the override handle is rotated from the closed position to the opened position.
Clause 6. The manual override mechanism of Clause 5, wherein the gear slider includes a gear catcher attached thereto, the gear catcher configured to catch the gear therein when the override handle is rotated from the closed position to the opened position.
Clause 7. The manual override mechanism of any of Clauses 1 to 6, further comprising a biasing member positioned adjacent the cam follower, the biasing member configured to urge the cam follower toward the override handle when the override handle is rotated from the closed position to the opened position.
Clause 8. A method of providing a manual override mechanism for an actuator, the method comprising: providing an override handle configured to be rotated between a closed position and an opened position via a flip motion; positioning a cam follower adjacent the override handle, the cam follower configured to be moved between a disengaged position and an engaged position; and forming a cam on a portion of the override handle, the cam configured to cause the cam follower to move from the disengaged position to the engaged position when the override handle is rotated from the closed position to the opened position; wherein movement of the cam follower from the disengaged position to the engaged position puts the actuator in manual operation mode.
Clause 9. The method of Clause 8, wherein the override handle is configured to block the cam follower from moving back to the disengaged position while the override handle remains in the opened position.
Clause 10. The method of Clause 8 or Clause 9, wherein the cam follower includes a cam extender configured to receive a push motion from the cam when the override handle is rotated from the closed position to the opened position.
Clause 11. The method of Clause 10, further comprising providing a cam tab on the cam extender, the cam tab configured to receive thereon the push motion from the cam.
Clause 12. The method of any of Clauses 8 to 11, wherein the cam follower includes a gear slider configured to cause a gear of the actuator to become disengaged when the override handle is rotated from the closed position to the opened position.
Clause 13. The method of Clause 12, further comprising attaching a gear catcher to the gear slider, the gear catcher configured to catch the gear therein when the override handle is rotated from the closed position to the opened position.
Clause 14. The method of any of Clauses 8 to 13, further comprising positioning a biasing member adjacent the cam follower, the biasing member configured to urge the cam follower toward the override handle when the override handle is rotated from the closed position to the opened position.
Clause 15. An actuator, comprising: at least one housing enclosing a plurality of gears therein and a control board configured to control operation of the plurality of gears; and a manual override mechanism mounted in the at least one housing, the manual override mechanism including an override handle configured to be rotated between a closed position and an opened position; wherein rotating the override handle from the closed position to the opened position causes the manual override mechanism to put the actuator in manual operation mode, and rotating the override handle from the opened position to the closed position causes the manual override mechanism to put the actuator to automatic operation mode.
Clause 16. The actuator of Clause 15, wherein the manual override mechanism further includes a cam follower positioned adjacent the override handle and configured to be moved between a disengaged position and an engaged position.
Clause 17. The actuator of Clause 16, wherein the manual override mechanism further includes a cam formed on a portion of the override handle, the cam configured to cause the cam follower to move from the disengaged position to the engaged position when the override handle is rotated from the closed position to the opened position.
Clause 18. The actuator of Clause 17, wherein the override handle is configured to block the cam follower from moving back to the disengaged position while the override handle remains in the opened position.
Clause 19. The actuator of Clause 18, wherein the cam follower includes a cam extender configured to receive a push motion from the cam when the override handle is rotated from the closed position to the opened position.
Clause 20. The actuator of Clause 18 or Clause 19, wherein the cam follower includes a gear slider configured to cause a gear of the actuator to become disengaged when the override handle is rotated from the closed position to the opened position.

## Claims

1. A manual override mechanism for an actuator (100), the manual override mechanism comprising:
an override handle (110) configured to be rotated between a closed position and an opened position via a flip motion;
a cam follower (214, 216) positioned adjacent the override handle (110) and configured to be moved between a disengaged position and an engaged position; and
a cam (326) formed on a portion of the override handle (110), the cam (326) being configured to cause the cam follower (214, 216) to move from the disengaged position to the engaged position when the override handle (110) is rotated from the closed position to the opened position;
wherein movement of the cam follower (214, 216) from the disengaged position to the engaged position puts the actuator (100) in manual operation mode.

2. The manual override mechanism of claim 1, wherein the override handle (110) is configured to block the cam follower (214, 216) from moving back to the disengaged position while the override handle (110) remains in the opened position.

3. The manual override mechanism of claim 1 or claim 2, wherein the cam follower (214, 216) includes a cam extender (214) configured to receive a push motion from the cam (326) when the override handle (110) is rotated from the closed position to the opened position.

4. The manual override mechanism of claim 3, wherein the cam extender (214) has a cam tab (344) disposed thereon, the cam tab (344) being configured to receive thereon the push motion from the cam (326).

5. The manual override mechanism of any of claims 1 to 4, wherein the cam follower (214, 216) includes a gear slider (216) configured to cause a gear (208) of the actuator (100) to become disengaged when the override handle (110) is rotated from the closed position to the opened position.

6. The manual override mechanism of claim 5, wherein the gear slider (216) includes a gear catcher (356) attached thereto, the gear catcher (356) being configured to catch the gear (208) therein when the override handle (110) is rotated from the closed position to the opened position.

7. The manual override mechanism of any of claims 1 to 6, comprising a biasing member (218) positioned adjacent the cam follower (214, 216), the biasing member (218) being configured to urge the cam follower (214, 216) toward the override handle (110) when the override handle (110) is rotated from the closed position to the opened position.

8. A method of providing a manual override mechanism for an actuator (100), the method comprising:
providing an override handle (110) configured to be rotated between a closed position and an opened position via a flip motion;
positioning a cam follower (214, 216) adjacent the override handle (110), the cam follower (214, 216) being configured to be moved between a disengaged position and an engaged position; and
forming a cam (326) on a portion of the override handle (110), the cam (326) being configured to cause the cam follower (214, 216) to move from the disengaged position to the engaged position when the override handle (110) is rotated from the closed position to the opened position;
wherein movement of the cam follower (214, 216) from the disengaged position to the engaged position puts the actuator (100) in manual operation mode.

9. The method of claim 8, wherein the override handle (110) is configured to block the cam follower (214, 216) from moving back to the disengaged position while the override handle (110) remains in the opened position.

10. An actuator (100), the actuator (100) comprising:
at least one housing (102, 108) enclosing a plurality of gears (208, 210) therein and a control board configured to control operation of the plurality of gears (208, 210); and
a manual override mechanism (200) mounted in the at least one housing (102, 108), the manual override mechanism (200) including an override handle (110) configured to be rotated between a closed position and an opened position;
wherein rotating the override handle (110) from the closed position to the opened position causes the manual override mechanism (200) to put the actuator (100) in manual operation mode, and rotating the override handle (110) from the opened position to the closed position causes the manual override mechanism (200) to put the actuator (100) to automatic operation mode.

11. The actuator (100) of claim 10, wherein the manual override mechanism (200) includes a cam follower (214, 216) positioned adjacent the override handle (110) and configured to be moved between a disengaged position and an engaged position.

12. The actuator (100) of claim 16, wherein the manual override mechanism (200) includes a cam (326) formed on a portion of the override handle (110), the cam (326) being configured to cause the cam follower (214, 216) to move from the disengaged position to the engaged position when the override handle (110) is rotated from the closed position to the opened position.

13. The actuator (100) of claim 12, wherein the override handle (110) is configured to block the cam follower (214, 216) from moving back to the disengaged position while the override handle (110) remains in the opened position.

14. The actuator (100) of claim 13, wherein the cam follower (214, 216) includes a cam extender (214) configured to receive a push motion from the cam (326) when the override handle (110) is rotated from the closed position to the opened position.

15. The actuator (100) of claim 13 or claim 14, wherein the cam follower (214, 216) includes a gear slider (216) configured to cause a gear (208) of the actuator (100) to become disengaged when the override handle (110) is rotated from the closed position to the opened position.
